# EUROPEAN PATENT APPLICATION

(11) **EP 4 831 443 A1**
(43) Date of publication of application: **28.10.2026**
(21) Application number: 26174047.6
(22) Date of filing: 22.04.2026
(51) Int. Cl.: F01D 5/18

(54) **TURBINE BLADE WITH A TIP PLENUM FOR A GAS TURBINE ENGINE**

(30) Priority: 22.04.2025 US 202519186246
(71) Applicant: RTX Corporation, Farmington, CT 06032 (US)
(72) Inventor: LAVINE, Griffin D., South Glastonbury, 06073 (US); JENNINGS, Timothy, Coatesville, 19320 (US); OLSEN, Christopher, Farmington, 06032 (US); FAUCHER, Adam J., Farmington, 06032 (US)
(74) Representative: Dehns

(57) **Abstract**

A turbine blade (58) includes a blade body (60). The blade body (60) extends radially between a base end (66) and a tip end (68). The blade body (60) includes a pressure side wall (84), a suction side wall (86), a tip end wall (88), and a plurality of ribs (90). The pressure side wall (84), the suction side wall (86), and the plurality of ribs (90) form a leading edge cavity (94), a trailing edge cavity (96), and a main body cavity (98). The main body cavity (98) is disposed between the leading edge cavity (94) and the trailing edge cavity (96). The blade body (60) further forms a core passage assembly (100) and a tip plenum (102). The core passage assembly (100) includes a plurality of core passages (104) extending outward from the base end (66). At least a first subset plurality of the plurality of discrete core passages (104) is directly connected to the tip plenum (102). The tip plenum (102) is disposed radially between the core passage assembly (100) and the tip end wall (88).

## Description

### BACKGROUND

### 1. Technical Field

This invention relates generally to gas turbine engines and, more particularly, to turbine blades for a gas turbine engine.

### 2. Background Information

A gas turbine engine typically includes a turbine section. The turbine section may include one or more turbines such as, but not limited to, a low-pressure turbine and a high-pressure turbine. These turbines may include multiple stages of blades and vanes. As fluid flows through the turbine section, the flow causes the blades to rotate about an axis of rotation. Temperatures within the turbine section may be relatively high, as the flow of fluid is received initially from a combustor of the gas turbine engine. Cooling air may be extracted from a compressor section of the gas turbine engine and used to cool the gas path components, for example, the blades of the turbines. Various turbine blade configurations are known in the art for mitigating the impact of high turbine section temperatures on turbine blade materials. While these known turbine blade configurations may be suitable for their intended purposes, there is always room in the art for improvement.

### SUMMARY

According to an aspect of the present invention, a turbine blade for a gas turbine engine includes a blade body. The blade body extends between a leading edge and a trailing edge. The blade body extends radially between a base end and a tip end relative to a gas turbine engine rotational axis. The blade body includes a pressure side wall, a suction side wall, a tip end wall, and a plurality of ribs. The pressure side wall, the suction side wall, and the plurality of ribs form a leading edge cavity, a trailing edge cavity, and a main body cavity within the blade body. The main body cavity is disposed between the leading edge cavity and the trailing edge cavity. The blade body further forms a core passage assembly and a common tip plenum at the main body cavity. The core passage assembly includes a plurality of discrete core passages extending radially outward from the base end. At least a first subset plurality of the plurality of discrete core passages is directly connected in fluid communication with the common tip plenum. The common tip plenum is disposed radially between the core passage assembly and the tip end wall.

Optionally, and in accordance with the above, the tip end wall may form a plurality of cooling apertures extending between the common tip plenum and the tip end.

Optionally, and in accordance with any of the above, the plurality of discrete core passages may include at least one leading core passage and at least one trailing core passage.

Optionally, and in accordance with any of the above, the plurality of discrete core passages may include at least one pressure-side core passage and at least one suction-side core passage.

Optionally, and in accordance with any of the above, at least one of the plurality of discrete core passages may be indirectly connected in fluid communication with the common tip plenum.

Optionally, and in accordance with any of the above, at least one of the plurality of discrete core passages may be isolated from fluid communication with the common tip plenum.

Optionally, and in accordance with any of the above, the plurality of discrete core passages may include a first core passage, and the first core passage may be connected in fluid communication with the leading edge cavity.

Optionally, and in accordance with any of the above, the first core passage may be connected in fluid communication with the leading edge cavity at a distal radial end of the first core passage.

Optionally, and in accordance with any of the above, the blade body may include a body segment disposed radially between the first core passage and the common tip plenum, and the body segment may further form the common tip plenum and a distal radial end of the first core passage.

Optionally, and in accordance with any of the above, the leading edge cavity may be connected in fluid communication with the common tip plenum along the tip end wall.

Optionally, and in accordance with any of the above, the plurality of discrete core passages may include a first core passage, and the first core passage may be connected in fluid communication with the trailing edge cavity.

Optionally, and in accordance with any of the above, the first core passage may be connected in fluid communication with the trailing edge cavity at a distal radial end of the first core passage.

Optionally, and in accordance with any of the above, the blade body may include a body segment disposed radially between the first core passage and the common tip plenum, and the body segment may further form the common tip plenum and a distal radial end of the first core passage.

Optionally, and in accordance with any of the above, the trailing edge cavity may be connected in fluid communication with the common tip plenum along the tip end wall.

Optionally, and in accordance with any of the above, the plurality of ribs may include a first rib and a second rib, the first rib may form the leading edge cavity and the main body cavity, and the second rib may form the trailing edge cavity and the main body cavity.

Optionally, and in accordance with any of the above, the common tip plenum may extend between and to the pressure side wall and the suction side wall and between and to the first rib and the second rib.

Optionally, and in accordance with any of the above, each of the plurality of discrete core passages may be directly connected in fluid communication with the common tip plenum.

According to another aspect of the present invention, a turbine blade for a gas turbine engine includes a blade body extending between a leading edge and a trailing edge. The blade body extends radially between a base end and a tip end relative to a gas turbine engine rotational axis. The blade body includes a pressure side wall, a suction side wall, a tip end wall, and a plurality of ribs. The plurality of ribs includes a first rib and a second rib. The pressure side wall, the suction side wall, the first rib, and the second rib form a main body cavity within the blade body. The blade body further forms a core passage assembly and a common tip plenum within the main body cavity. The core passage assembly includes a plurality of discrete core passages extending radially outward from the base end. At least a first subset plurality of the plurality of discrete core passages is directly connected in fluid communication with the common tip plenum. Each passage of the first subset plurality is isolated from each other passage of the first subset plurality from the base end to the common tip plenum. The common tip plenum is disposed radially between each of the plurality of discrete core passages and the tip end wall.

Optionally, and in accordance with the above, at least one of the plurality of discrete core passages may be indirectly connected in fluid communication with the common tip plenum.

According to another aspect of the present invention, a gas turbine engine for an aircraft propulsion system includes a bladed turbine rotor rotatable about a rotational axis of the gas turbine engine. The bladed turbine rotor includes a plurality of turbine blades. Each of the plurality of turbine blades includes a blade body. The blade body extends between a leading edge and a trailing edge. The blade body extends radially between a base end and a tip end. The blade body includes a pressure side wall, a suction side wall, a tip end wall, and a plurality of ribs. The plurality of ribs includes a first rib and a second rib. The pressure side wall, the suction side wall, and the plurality of ribs form a leading edge cavity, a trailing edge cavity, and a main body cavity within the blade body. The main body cavity is disposed between the leading edge cavity and the trailing edge cavity. The blade body further forms a core passage assembly and a common tip plenum at the main body cavity. The core passage assembly includes a plurality of discrete core passages extending radially outward from the base end. The plurality of discrete core passages includes at least one core passage formed by the pressure side wall, at least one core passage is formed by the suction side wall, at least one core passage is formed by the first rib, and at least one core passage formed by the second rib. At least a first subset plurality of the plurality of discrete core passages is directly connected in fluid communication with the common tip plenum. The common tip plenum is disposed radially between the core passage assembly and the tip end wall.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates a cutaway, side view of a gas turbine engine for an aircraft propulsion system, in accordance with one or more embodiments of the present invention.
FIG. 2 schematically illustrates a perspective view of a turbine blade for a turbine section of a gas turbine engine, in accordance with one or more embodiments of the present invention.
FIG. 3 schematically illustrates a cutaway view of the turbine blade taken along Line 3-3 of FIG. 2, in accordance with one or more embodiments of the present invention.
FIG. 4 schematically illustrates a cutaway, side view of the turbine blade, in accordance with one or more embodiments of the present invention.
FIG. 5 illustrates a perspective view of the turbine blade with cavities and passages of the turbine blade depicted positively, in accordance with one or more embodiments of the present invention.
FIG. 6 schematically illustrates a cutaway view of a portion of the turbine blade, in accordance with one or more embodiments of the present invention.
FIGS. 7A-F schematically illustrate various exemplary configurations of the core passages of the turbine blade, in accordance with one or more embodiments of the present invention.

### DETAILED DESCRIPTION

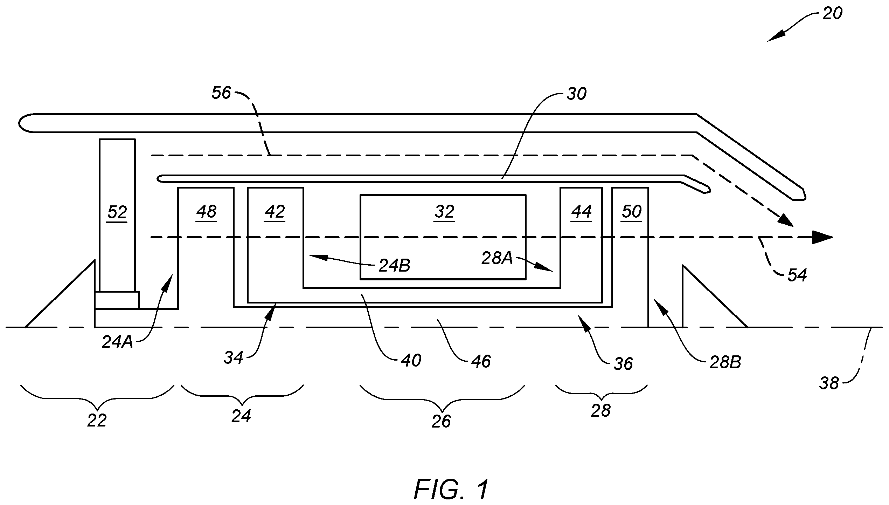

FIG. 1 schematically illustrates a gas turbine engine 20. The gas turbine engine 20 of FIG. 1 is a multi-spool turbofan gas turbine engine for an aircraft propulsion system. However, while the following description and accompanying drawings may refer to the turbofan gas turbine engine of FIG. 1 as an example, it should be understood that aspects of the present invention may be equally applicable to other types of gas turbine engines including, but not limited to, a turboshaft gas turbine engine, a turboprop gas turbine engine, a turbojet gas turbine engine, or a propfan (e.g., an open rotor) gas turbine engine.

The gas turbine engine 20 of FIG. 1 includes a fan section 22, a compressor section 24, a combustor section 26, a turbine section 28, and an engine static structure 30. The compressor section 24 of FIG. 1 includes a low-pressure compressor (LPC) 24A and a high-pressure compressor (HPC) 24B. The combustor section 26 includes a combustor 32 (e.g., an annular combustor). The turbine section 28 includes a high-pressure turbine (HPT) 28A and a low-pressure turbine (LPT) 28B.

Components of the fan section 22, the compressor section 24, and the turbine section 28 form a first rotational assembly 34 (e.g., a high-pressure spool) and a second rotational assembly 36 (e.g., a low-pressure spool) of the gas turbine engine 20. The first rotational assembly 34 and the second rotational assembly 36 are mounted for rotation about a rotational axis 38 (e.g., an axial centerline) of the gas turbine engine 20 relative to the engine static structure 30.

The first rotational assembly 34 includes a first shaft 40, a bladed first compressor rotor 42 for the high-pressure compressor 24B, and a bladed first turbine rotor 44 for the high-pressure turbine 28A. The first shaft 40 interconnects the bladed first compressor rotor 42 and the bladed first turbine rotor 44.

The second rotational assembly 36 includes a second shaft 46, a bladed second compressor rotor 48 for the low-pressure compressor 24A, and a bladed second turbine rotor 50 for the low-pressure turbine 28B. The second shaft 46 interconnects the bladed second compressor rotor 48 and the bladed second turbine rotor 50. The second shaft 46 may additionally be directly or indirectly coupled to a bladed fan rotor 52 for the fan section 22. For example, the second shaft 46 may be coupled to the bladed fan rotor 52 (e.g., an input shaft of the bladed fan rotor 52) by a reduction gear assembly configured to drive the bladed fan rotor 52 at a reduced rotational speed relative to the second shaft 46. The first shaft 40 and the second shaft 46 are concentric and configured to rotate about the rotational axis 38. The present invention, however, is not limited to concentric configurations of the first shaft 40 and the second shaft 46.

The engine static structure 30 may include one or more engine cases, cowlings, bearing assemblies, and/or other non-rotating structures configured to house and/or support (e.g., rotationally support) components of the gas turbine engine 20 sections 22, 24, 26, 28. The engine static structure 30 may form an exterior (e.g., an outer radial portion) of the gas turbine engine 20.

In operation of the gas turbine engine 20 of FIG. 1, ambient air is directed through the fan section 22 and into a core flow path 54 (e.g., an annular flow path) and a bypass flow path 56 (e.g., an annular flow path) by rotation of the bladed fan rotor 52. Airflow along the core flow path 54 is compressed by the low-pressure compressor 24A and the high-pressure compressor 24B, mixed and burned with fuel in the combustor 32, and then directed through the high-pressure turbine 28A and the low-pressure turbine 28B. The bladed first turbine rotor 44 and the bladed second turbine rotor 50 rotationally drive the first rotational assembly 34 and the second rotational assembly 36, respectively, in response to the combustion gas flow through the high-pressure turbine 28A and the low-pressure turbine 28B. The bypass flow path 56 may be disposed outside the engine static structure 30. For example, the engine static structure 30 and an outer aircraft propulsion system housing (e.g., a nacelle) may form an annular bypass duct radially therebetween, and airflow may be directed through the annular bypass duct along the bypass flow path 56.

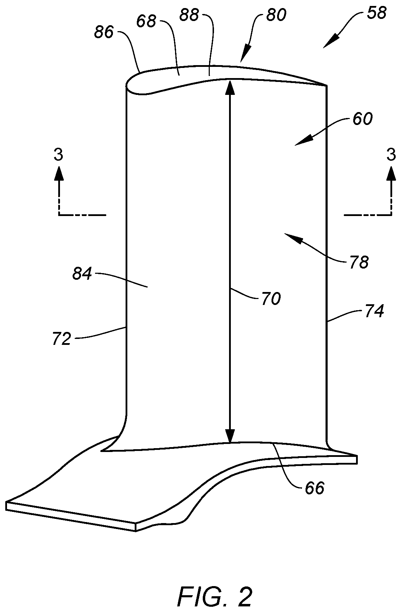

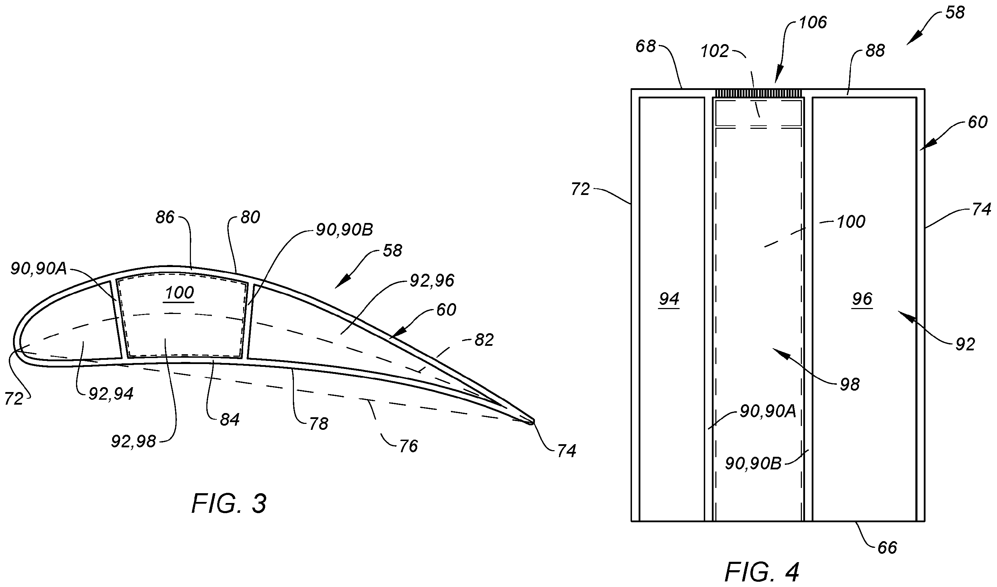

FIGS. 2-4 illustrate a turbine blade 58. FIG. 2 illustrates a perspective view of the turbine blade 58. FIG. 3 schematically illustrates a cutaway view of the turbine blade 58 taken along Line 3-3 of FIG. 2. FIG. 4 illustrates a cutaway, side view of the turbine blade 58. The turbine blade 58 may be configured, for example, for use on the bladed first turbine rotor 44 and/or the bladed second turbine rotor 50 (see FIG. 1). The turbine blade 58 includes a blade body 60.

The blade body 60 extends, in a spanwise direction, between and to a base end 66 of the blade body 60 and a tip end 68 of the blade body 60. With the blade body 60 installed on a bladed turbine rotor, such as the bladed first turbine rotor 44 and/or the bladed second turbine rotor 50, the spanwise direction of the blade body 60 may be generally oriented in a radial direction of the bladed turbine rotor (e.g., relative to a rotational axis of the bladed turbine rotor). The blade body 60 has a span 70 extending between and to the base end 66 and the tip end 68 in the spanwise direction. The blade body extends, in a chordwise direction (e.g., orthogonal to the spanwise direction), between and to a leading edge 72 of the blade body 60 and a trailing edge 74 of the blade body 60. The blade body 60 has a chord line 76 extending through and intersecting the leading edge 72 and the trailing edge 74 in the chordwise direction. The blade body 60 forms a pressure side surface 78 and a suction side surface 80. The pressure side surface 78 is disposed opposite the blade body 60 from the suction side surface 80. The pressure side surface 78 and the suction side surface 80 extend between and to the base end 66 and the tip end 68. The pressure side surface 78 and the suction side surface 80 extend between and to the leading edge 72 and the trailing edge 74. The blade body 60 has a mean camber line 82 which intersects the chord line 76 at the leading edge 72 and the trailing edge 74 and which lies halfway between the pressure side surface 78 and the suction side surface 80 between the leading edge 72 and the trailing edge 74.

The blade body 60 includes a pressure side wall 84, a suction side wall 86, a tip end wall 88, and a plurality of ribs 90. In some embodiments, the blade body 60, including the pressure side wall 84, the suction side wall 86, the tip end wall 88, and the ribs 90, may be formed as a unitary component. The term "unitary component" as used herein means a single component, wherein the blade body 60, and its pressure side wall 84, suction side wall 86, the tip end wall 88, and ribs 90, is an inseparable body (e.g., formed of a single material). For example, the blade body 60, including the pressure side wall 84, the suction side wall 86, and the ribs 90 may be formed as a unitary component using an investment casting process using fugitive cores, an additive manufacturing process, or the like.

The pressure side wall 84 and the suction side wall 86 each extend between and to the base end 66 and the tip end 68. The pressure side wall 84 and the suction side wall 86 each extend between and to the leading edge 72 and the trailing edge 74. The pressure side wall 84 forms the pressure side surface 78. Similarly, the suction side wall 86 forms the suction side surface 80. The tip end wall 88 forms the tip end 68. The ribs 90 extend between and interconnect the pressure side wall 84 and the suction side wall 86. The ribs 90 extend radially within the turbine blade 58 between and to or substantially between and to the base end 66 and the tip end wall 88. The ribs 90 are arrayed chordwise within the turbine blade 58 as shown, for example, in FIG. 3. The ribs 90 of FIGS. 3 and 4 include a first rib 90A and a second rib 90B; however, the present invention is not limited to any particular quantity of the ribs 90. The first rib 90A is disposed chordwise between the leading edge 72 and the second rib 90B. The second rib 90B is disposed chordwise between the first rib 90A and the trailing edge 74.

The blade body 60 forms a plurality of internal cavities 92 of the turbine blade 58. The internal cavities 92 are configured to direct cooling air through the blade body 60, for example, from the base end 66 which may be connected in fluid communication with a cooling air source (e.g., compressor bleed air). This cooling air may be directed through the internal cavities 92 and out of the turbine blade 58 through cooling holes formed through the pressure side wall 84, the suction side wall 86, and the tip end wall 88. The internal cavities 92 include a leading edge cavity 94, a trailing edge cavity 96, and a main body cavity 98.

The leading edge cavity 94 is formed by and between the pressure side wall 84, the suction side wall 86, and the first rib 90A at the leading edge 72. The leading edge cavity 94 of FIG. 4 extends radially from the base end 66 to the tip end wall 88.

The trailing edge cavity 96 is formed by and between the pressure side wall 84, the suction side wall 86, and the second rib 90B at the trailing edge 74. The trailing edge cavity 96 of FIG. 4 extends radially from the base end 66 to the tip end wall 88.

The main body cavity 98 is formed by the blade body 60 chordwise between the leading edge cavity 94 and the trailing edge cavity 96. The main body cavity 98 of FIGS. 3 and 4 is formed by and between the pressure side wall 84, the suction side wall 86, the first rib 90A, and the second rib 90B. The main body cavity 98 of FIG. 4 extends radially from the base end 66 to the tip end wall 88. The turbine blade 58 of FIGS. 3 and 4 includes a single main body cavity 98 between the leading edge cavity 94 and the trailing edge cavity 96; however, it is contemplated that the blade body 60 may alternatively form more than one main body cavity 98 (e.g., arranged in the chordwise direction) between the leading edge cavity 94 and the trailing edge cavity 96.

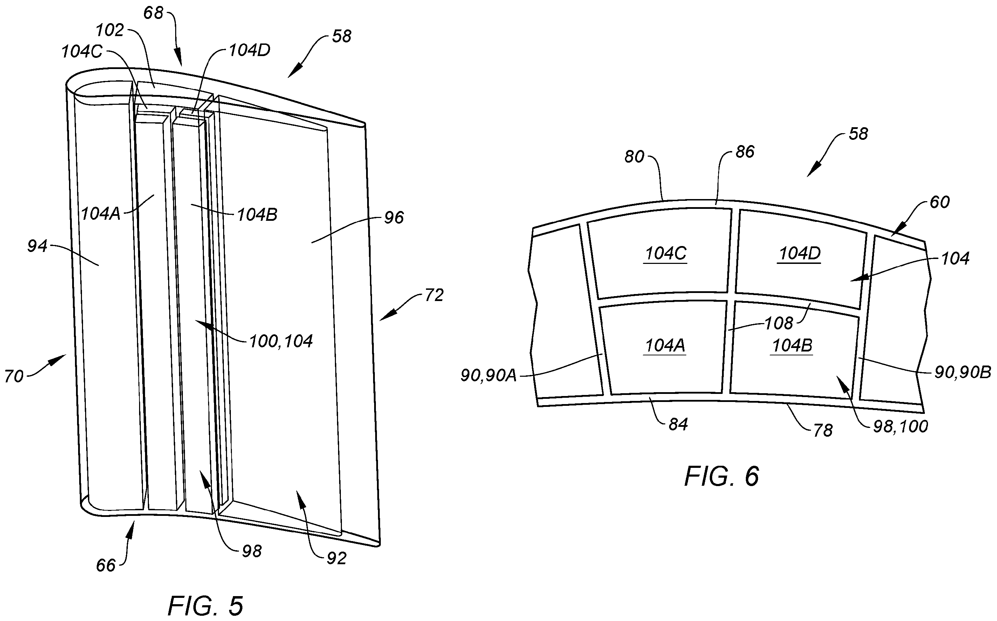

Referring to FIGS. 4-6, the blade body 60 forms a core passage assembly 100 and a common tip plenum 102 within the main body cavity 98. The core passage assembly 100 includes a plurality of discrete core passages 104. FIG. 5 illustrates a perspective view of the turbine blade 58 with the internal cavities 92 and the core passages 104 depicted positively (e.g., with solid features). FIG. 6 illustrates a cutaway view of the blade body 60 showing the core passages 104. Each of the core passages 104 extends radially from the base end 66 to or toward the common tip plenum 102. At least some (e.g., a subset plurality) of the core passages 104 are directly connected in fluid communication with the common tip plenum 102. In other words, at least some of the core passages 104 extend radially between and to the base end 66 and the common tip plenum 102. The common tip plenum 102 is disposed radially outward of each of the core passages 104 radially between the core passages assembly 100 and the tip end wall 88. The common tip plenum 102 of FIG. 5, for example, extends between and to the first rib 90A and the second rib 90B and between and to the pressure side wall 84 and the suction side wall 86. As shown in FIG. 4, the tip end wall 88 may form a plurality of cooling apertures 106 extending through the tip end wall 88 from the common tip plenum 102 to the tip end 68.

Referring to FIGS. 5 and 6, the core passages 104 may be arranged with more than one of the core passages 104 in the chordwise direction of the turbine blade 58 and/or more than one of the core passages 104 in a thickness direction of the turbine blade 58, which thickness direction extends between the pressure side wall 84 and the suction side wall 86, for example, orthogonal to the mean camber line 82 (see FIG. 3). As a non-limiting example, the core passages 104 of FIGS. 5 and 6 include four core passages 104 with a two-by-two arrangement of the core passages 104 in the chordwise and thickness directions. In this example of FIGS. 5 and 6, the core passages 104 include a pair of pressure side passages 104A-B (e.g., leading and trailing passages) and a pair of suction side passages 104C-D (e.g., leading and trailing passages). Of course, the present invention is not limited to this exemplary configuration of the core passages 104 of FIGS. 5 and 6. Each of the core passages 104 of FIGS. 5 and 6 extends radially from the base end 66 to the common tip plenum 102 and is directly connected in fluid communication with the common tip plenum 102. The blade body 60 includes a plurality of body segments 108 further forming the core passages 104 within the main body cavity 98. The body segments 108 generally extend radially from the base end 66 to the common tip plenum 102 separating each of the core passages 104. For example, the body segments 108 may isolate each of the core passages 104 from fluid communication with each of the other core passages 104 from the base end 66 to the common tip plenum 102.

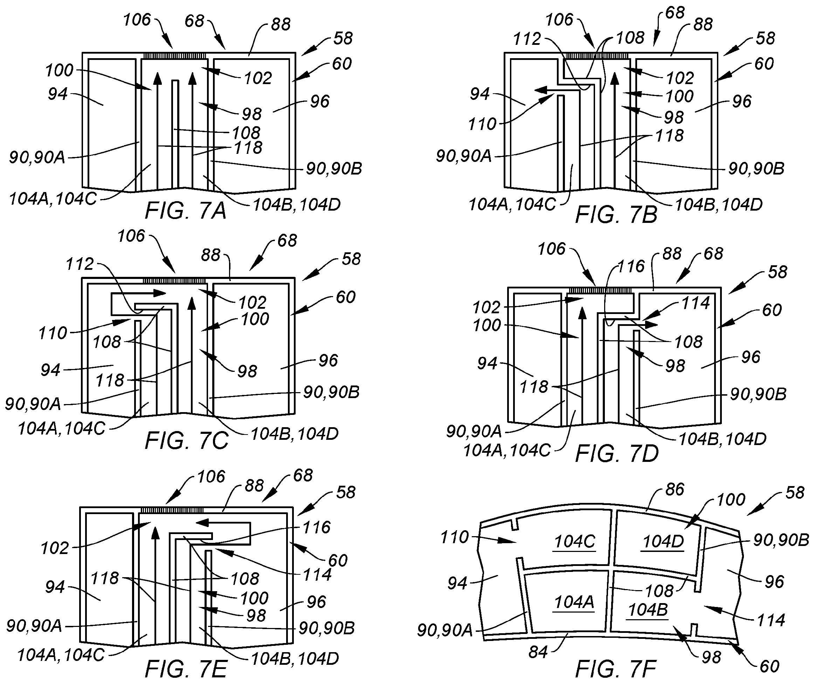

FIGS. 7A-F illustrate various exemplary configurations of the core passages 104. FIGS. 7A-E illustrate cutaway, side views of the turbine blade 58 each showing a chordwise-adjacent pair of the core passages 104 (e.g., the core passages 104A-B and/or the core passages 104C-D). As shown in FIG. 7A, each of the core passages 104 may extend radially outward to and be connected in fluid communication with the common tip plenum 102.

In some embodiments, as shown in FIGS. 7B-C and 7F, one or more of the core passages 104 may be isolated from the common tip plenum 102 by the body segments 108. For example, FIG. 7B shows the core passages 104A and/or 104C isolated from the common tip plenum 102 while the core passages 104B and/or 104D are connected in fluid communication with the common tip plenum 102. Here, the core passages 104A and/or 104C may be connected in fluid communication with the leading edge cavity 94. The blade body 60 (e.g., the rib 90A) may form an aperture 110 connecting the core passages 104A and/or 104C with the leading edge cavity 94, for example, at (e.g., on, adjacent, or proximate) a distal radial end 112 of the core passages 104A and/or 104C. In some further embodiments, as shown in FIG. 7C, the leading edge cavity 94 may be connected in fluid communication with the common tip plenum 102, for example, along the tip end wall 88. Accordingly, in this configuration, the core passages 104A and/or 104C may be indirectly connected in fluid communication with the common tip plenum 102 through the leading edge cavity 94.

In some embodiments, as shown in FIGS. 7D-F, one or more of the core passages 104 may be isolated from the common tip plenum 102 by the body segments 108. For example, FIG. 7D shows the core passages 104B and/or 104D isolated from the common tip plenum 102 while the core passages 104A and/or 104C are connected in fluid communication with the common tip plenum 102. Here, the core passages 104B and/or 104D may be connected in fluid communication with the trailing edge cavity 96. The blade body 60 (e.g., the rib 90B) may form an aperture 114 connecting the core passages 104B and/or 104D with the trailing edge cavity 96, for example, at (e.g., on, adjacent, or proximate) a distal radial end 116 of the core passages 104B and/or 104D. In some further embodiments, as shown in FIG. 7E, the trailing edge cavity 96 may be connected in fluid communication with the common tip plenum 102, for example, along the tip end wall 88. Accordingly, in this configuration, the core passages 104B and/or 104D may be indirectly connected in fluid communication with the common tip plenum 102 through the trailing edge cavity 96.

In operation of the gas turbine engine 20 (see FIG. 1), compressed air (e.g., bleed air from the compressor section 24) may be directed into and through the turbine blade 58 to facilitate cooling of the blade body 60. As shown in FIGS. 7A-E, for example, cooling air may be directed from the base end 66 through each of the core passages 104 along air flowpaths 118. The configuration of the core passage assembly 100 and its core passages 104 facilitates efficient use of cooling air through each of the core passages 104 by consolidating the cooling air from the core passages 104 in the common tip plenum 102 where the cooling air is directed through the cooling apertures 106 for cooling the blade body 60 proximate the tip end 68. This configuration also facilitates dirt and other debris purging from the radially-extending core passages 104 through the single common tip plenum 102. The configuration of the common tip plenum 102 at the tip end wall 88 avoids the need for radial ribs or other blade body 60 structures at the tip end wall 88 thereby facilitating improved cooling aperture 106 formation and distribution, thereby promoting more uniform tip end 68 cooling. The avoided radial ribs or other blade body 60 structures at the tip end wall 88 also reduce the metal mass of the turbine blade 58 at its outer radial end, thereby reducing the pull of the turbine blade 58 during operation of the gas turbine engine 20.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A turbine blade (58) for a gas turbine engine (20), the turbine blade (58) comprising:
a blade body (60) extending between a leading edge (72) and a trailing edge (74), the blade body (60) extending radially between a base end (66) and a tip end (68) relative to a gas turbine engine rotational axis (38), the blade body (60) including a pressure side wall (84), a suction side wall (86), a tip end wall (88), and a plurality of ribs (90),
wherein the pressure side wall (84), the suction side wall (86), and the plurality of ribs (90) form a leading edge cavity (94), a trailing edge cavity (96), and a main body cavity (98) within the blade body (60), the main body cavity (98) disposed between the leading edge cavity (94) and the trailing edge cavity (96), the blade body (60) further forming a core passage assembly (100) and a common tip plenum (102) at the main body cavity (98),
wherein the core passage assembly (100) includes a plurality of discrete core passages (104) extending radially outward from the base end (66), at least a first subset plurality of the plurality of discrete core passages (104) directly connected in fluid communication with the common tip plenum (102), and
wherein the common tip plenum (102) is disposed radially between the core passage assembly (100) and the tip end wall (88).

2. The turbine blade (58) of claim 1, wherein the tip end wall (88) forms a plurality of cooling apertures (106) extending between the common tip plenum (102) and the tip end (68).

3. The turbine blade (58) of claim 1 or 2, wherein:
the plurality of discrete core passages (104) includes at least one leading core passage (104A, 104C) and at least one trailing core passage (104B, 104D); and/or
the plurality of discrete core passages (104) includes at least one pressure-side core passage (104A, 104B) and at least one suction-side core passage (104C, 104D).

4. The turbine blade (58) of any preceding claim, wherein:
at least one of the plurality of discrete core passages (104) is indirectly connected in fluid communication with the common tip plenum (102); and/or
at least one of the plurality of discrete core passages (104) is isolated from fluid communication with the common tip plenum (102).

5. The turbine blade (58) of any preceding claim, wherein the plurality of discrete core passages (104) includes a first core passage (104A, 104C), and the first core passage (104A, 104C) is connected in fluid communication with the leading edge cavity (94).

6. The turbine blade (58) of claim 5, wherein:
the first core passage (104A, 104C) is connected in fluid communication with the leading edge cavity (94) at a distal radial end (112) of the first core passage (104A, 104C); and/or
the leading edge cavity (94) is connected in fluid communication with the common tip plenum (102) along the tip end wall (88).

7. The turbine blade (58) of claim 5 or 6, wherein the blade body (60) includes a body segment (108) disposed radially between the first core passage (104A, 104C) and the common tip plenum (102), and the body segment (108) further forms the common tip plenum (102) and a distal radial end (112) of the first core passage (104A, 104C).

8. The turbine blade (58) of any preceding claim, wherein the plurality of discrete core passages (104) includes a first core passage (104B, 104D), and the first core passage (104B, 104D) is connected in fluid communication with the trailing edge cavity (96).

9. The turbine blade (58) of claim 8, wherein:
the first core passage (104B, 104D) is connected in fluid communication with the trailing edge cavity (96) at a distal radial end (116) of the first core passage (104B, 104D); and/or
the trailing edge cavity (96) is connected in fluid communication with the common tip plenum (102) along the tip end wall (88).

10. The turbine blade (58) of claim 8 or 9, wherein the blade body (60) includes a body segment (108) disposed radially between the first core passage (104B, 104D) and the common tip plenum (102), and the body segment (108) further forms the common tip plenum (102) and a distal radial end (116) of the first core passage (104B, 104D).

11. The turbine blade (58) of any preceding claim, wherein the plurality of ribs (90) includes a first rib (90A) and a second rib (90B), the first rib (90A) forms the leading edge cavity (94), and the main body cavity (98) and the second rib (90B) forms the trailing edge cavity (96) and the main body cavity (98).

12. The turbine blade (58) of claim 11, wherein the common tip plenum (102) extends between and to the pressure side wall (84) and the suction side wall (86) and between and to the first rib (90A) and the second rib (90B).

13. The turbine blade (58) of any preceding claim, wherein each of the plurality of discrete core passages (104) is directly connected in fluid communication with the common tip plenum (102).

14. A turbine blade (58) for a gas turbine engine (20), the turbine blade (58) comprising:
a blade body (60) extending between a leading edge (72) and a trailing edge (74), the blade body (60) extending radially between a base end (66) and a tip end (68) relative to a gas turbine engine rotational axis (38), the blade body (60) including a pressure side wall (84), a suction side wall (86), a tip end wall (88), and a plurality of ribs (90), the plurality of ribs (90) including a first rib (90A) and a second rib (90B),
wherein the pressure side wall (84), the suction side wall (86), the first rib (90A), and the second rib (90B) form a main body cavity (98) within the blade body (60), the blade body (60) further forming a core passage assembly (100) and a common tip plenum (102) within the main body cavity (98),
wherein the core passage assembly (100) includes a plurality of discrete core passages (104) extending radially outward from the base end (66), at least a first subset plurality of the plurality of discrete core passages (104) directly connected in fluid communication with the common tip plenum (102), each passage of the first subset plurality isolated from each other passage of the first subset plurality from the base end (66) to the common tip plenum (102), and
wherein the common tip plenum (102) is disposed radially between each of the plurality of discrete core passages (104) and the tip end wall (88),
wherein, optionally, at least one of the plurality of discrete core passages (104) is indirectly connected in fluid communication with the common tip plenum (102).

15. A gas turbine engine (20) for an aircraft propulsion system, the gas turbine engine (20) comprising:
a bladed turbine rotor (44, 50) rotatable about a rotational axis (38) of the gas turbine engine (20), the bladed turbine rotor (44, 50) including a plurality of turbine blades (58), each of the plurality of turbine blades (58) including a blade body (60), the blade body (60) extending between a leading edge (72) and a trailing edge (74), the blade body (60) extending radially between a base end (66) and a tip end (68), the blade body (60) including a pressure side wall (84), a suction side wall (86), a tip end wall (88), and a plurality of ribs (90), the plurality of ribs (90) including a first rib (90A) and a second rib (90B),
wherein the pressure side wall (84), the suction side wall (86), and the plurality of ribs (90) form a leading edge cavity (94), a trailing edge cavity (96), and a main body cavity (98) within the blade body (60), the main body cavity (98) disposed between the leading edge cavity (94) and the trailing edge cavity (96), the blade body (60) further forming a core passage assembly (100) and a common tip plenum (102) at the main body cavity (98),
wherein the core passage assembly (100) includes a plurality of discrete core passages (104) extending radially outward from the base end (66), the plurality of discrete core passages (104) including at least one core passage (104A, 104B) formed by the pressure side wall (84), at least one core passage (104C, 104D) formed by the suction side wall (86), at least one core passage (104A, 104C) formed by the first rib (90A), and at least one core passage (104B, 104D) formed by the second rib (90B), at least a first subset plurality of the plurality of discrete core passages (104) directly connected in fluid communication with the common tip plenum (102), and
wherein the common tip plenum (102) is disposed radially between the core passage assembly (100) and the tip end wall (88).
